# EUROPEAN PATENT SPECIFICATION

(11) **EP 2 830 718 B1**
(45) Date of publication and mention of the grant of the patent: **24.04.2019**
(21) Application number: 13714994.4
(22) Date of filing: 28.03.2013
(51) Int. Cl.: A62C 13/00, A62D 1/00

(54) **FIRE EXTINGUISHER AND FIRE EXTINGUISHER MEDIUM**
FEUERLÖSCHER UND FEUERLÖSCHMEDIUM
EXTINCTEUR D'INCENDIE ET AGENT EXTINCTEUR D'INCENDIE

(30) Priority: 30.03.2012 GB 201205733
(43) Date of publication of application: 04.02.2015
(73) Proprietor: Goodwin Plc, Hanley Stoke-on-Trent ST1 3NR (GB)
(72) Inventor: GOODWIN, Richard Stanley, Stoke-on-Trent Staffordshire ST1 3NR (GB); BAYLAY, Andrew James, Stoke-on-Trent Staffordshire ST1 3NR (GB)
(74) Representative: J A Kemp
(86) International application number: PCT/GB2013/050833
(87) International publication number: WO 2013/144644

(56) References cited:
- DE-A1- 2 353 498
- US-A- 3 238 129

## Description

The invention relates to the use of a stable aqueous suspension of fine chemically expanded vermiculite particles in a particle size range of from 1 nanometre to 2000 micrometres as a fire extinguishing medium and to fire extinguishing equipment containing such a suspension.

Vermiculite is a naturally occurring mineral of chemical formula (Mg,Fe,Al)₃(Al,Si)₄O₁₀(OH)_{2.}4H₂O. Vermiculite may be expanded by heat or chemical treatment to form exfoliated vermiculite.

Exfoliated vermiculite particles may be suspended in a stable aqueous suspension, for example as disclosed in US 6,309,740. Aqueous suspensions of expanded vermiculite have been used for fireproofing flexible materials such as paper and cloth.

Vermiculite has also been used mixed with plaster to form a fire resistant coating.

FR 2 935 907 contemplates controlling fire by forming in situ a mixture of plaster with water in a weight ratio of 1 to 10 to form a sprayable liquid which is applied by spraying. In one embodiment FR 2 935 907 contemplates further in situ mixing of the plaster and water mixture with an inflammable granular mineral material with a density of less than 1, for example vermiculite, to form a mixture which can float on the surface of a burning liquid. Such a mixture once made could not be stored ready for use over an extended period.

Further fire extinguishing compositions comprising vermiculite are disclosed in US 3 238 129 and DE 23 53 468.

The present invention relates to the use of a stable aqueous suspension of fine chemically expanded vermiculite as a fire extinguishing material and to fire extinguishing equipment containing such a suspension. Preferably the vermiculite is present at between 3% and 40% by weight, more preferably 10% to 30% especially 15% to 25% such as about 20%. The vermiculite has a particle size of from 1 nanometre to 2000 nanometres. Preferably the vermiculite is very fine with particle size between nanometre to 1000 micrometres and preferably not greater than 300 micrometres.

While an aqueous suspension of vermiculite with no additional additives provides an excellent extinguisher medium the suspension may additionally include other additives such as suppressants conventionally used in fire extinguisher systems to enhance performance provided that they do not interfere with the ability of the vermiculite to remain in suspension over an extended period. Preferably the vermiculite will remain in suspension if left undisturbed for a period of at least 6 months at room temperature such as at between 10 to 30 degrees centigrade, for example at 20 degrees centigrade, more preferably at least 12 months especially 24 months or more.

Conventional fire extinguishers rely on one or more of the following three principles:
(1) Water based: The application by spraying of water to douse the flames and to cool the area on fire to below the ignition point so as to extinguish the flames;
(2) Dry powder or foam: Surrounding the area on fire with a wet foam or a dry powder to douse the flames and to starve the fire of oxygen so as to extinguish the flames;
(3) CO₂: Removing oxygen from the area of the fire so that combustion can no longer take place, for example using propelled Halon gas or dry ice CO₂.

Controlling a fire by spraying a water based dispersion of very fine expanded vermiculite onto the area of the fire controls the fire in five ways, effectively combining and extending the individual benefits provided by the different types of conventional extinguishers:
(1) The water in the suspension and trapped within the vermiculite particles lowers the temperature of the area on fire by absorption of the latent heat of vaporisation and helps to extinguish the fire;
(2) The suspension forms an excellent insulating layer, insulating the hot area of the fire, which otherwise, although cooled by (1), may radiate and spread to adjacent areas not already on fire;
(3) The suspension forms a protective insulating fire resistant coating over the adjacent area not on fire that prevents any burning material landing on the area from an area on fire from starting a fire on the combustible material under this coating;
(4) Vermiculite of very fine particle size creates an oxygen barrier between the combustible material that has not yet caught fire and the oxygen in the adjacent atmosphere that is needed for combustion to take place.
(5) The platelet structure of the vermiculite particles holds water and wets up well.

This results in the fine particles sticking to the object, clothing or flesh to provide an improved dousing effect and to build up an insulation barrier. This contrasts with water which bounces off and drains away. The vermiculite suspension is also much better that foam or powder extinguishing material in sticking to a vertical object. The vermiculite suspension forms an excellent thermal insulation layer.

Typically a first aid measure for flesh burns may include isolating the burn from oxygen. Very fine vermiculite particles when applied in a spray may form an oxygen barrier layer so that use of the vermiculite dispersion to extinguish a fire affecting a person or animal may additionally provide an initial oxygen blocking protective layer for burnt skin as well as extinguishing the fire and providing an insulating layer against further fire or heat.

The invention will be more clearly understood from the following description and figures given by example only in which:

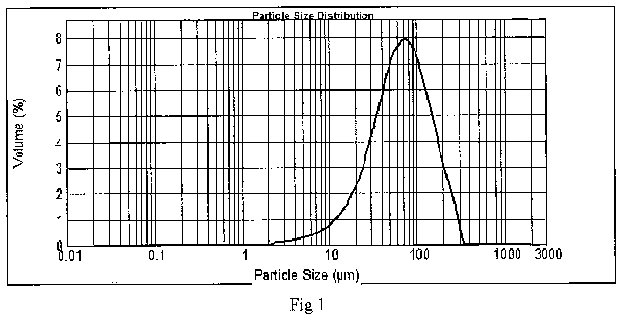

Figure 1 is an illustrative size distribution chart for Vermiculite Dispersion DM38 from Dupré Minerals Limited.

Vermiculite dispersions such as DM38 from Dupré Minerals Limited are available with expanded vermiculite in controlled particle size ranges. The vermiculite is capable of being retained in suspension in such dispersions for extended periods for months or a year or two years or more. DM38 from Dupré Minerals Limited has a size distribution for illustrative purposes set out in Figure 1. The particles range from nanometre sizes to 1000 micrometres with the majority of the vermiculite being around 300 micrometres in size. For use as a fire extinguisher medium the particle size distribution should be such that the vermiculite may be maintained in suspension over an extended period, will provide a suitable spray when administered from conventional fire extinguisher equipment, will maintain a good coating ability when sprayed and will provide a good thermal insulation and oxygen barrier properties when sprayed in a fire extinguishing situation. In the invention, the vermiculite particle size is in a range of from 1 nanometre to 2000 micrometres, preferably less than 1000 micrometres and more preferably 300 micrometres or less. Preferably at least 90% by weight and more preferably 95% by weight of the vermiculite particles should be no larger than 300 micrometres and more preferably between 1 and 300 micrometres. Vermiculite may be present in a suitable suspension at between 3% and 40% by weight, preferably 10 to 30% and more preferably 15% to 25% especially about 20%.

While an aqueous suspension of vermiculite with no additional additives and especially a suspension in deionised or distilled water provides an excellent extinguisher medium the suspension may additionally include other additives such as suppressants conventionally used in fire extinguisher systems to enhance performance and additives to enhance stability of the suspension. The additives should preferably not adversely interfere with the ability of the vermiculite to remain in suspension over an extended period and preferably should not interfere with the ability of the suspension when sprayed to form a protective fire resistant and thermal insulating coating. A mixture of plaster, water and vermiculite prepared in accordance with FR 2 935 907 will not be a stable suspension. Preferably there is no plaster or less than 10% by weight such as less than 5% by weight or less than 1% by weight plaster present in the extinguisher medium.

The fire extinguishing medium may be provided in any suitable container which permits its rapid application to a fire and its surrounding area or to an area at risk in the event of a fire or potential fire being identified either by manual operation or automatically in response to an alarm or other signal. A suitable container which may be filled with a fire extinguishing medium comprising an aqueous suspension of fine expanded vermiculite may be made of any suitable material such as metal, polymer, carbon fibre, glass or Kevlar and is preferably capable of being pressurised or pumped out so as to omit a spray from a hose or other outlet. Examples of suitable vessels include:
a hand portable vessel preferably of from 0.125 to 50 litres (0.25 to 40Kg fluid content). The vessel may be a stored pressure or cartridge operated fire extinguisher of the type conventionally used as a portable water extinguisher;
a semi portable extinguisher optionally on wheels form 5 litres to 250 litres capacity;
a tank with a pump or pressurised gas source mounted in or on a fire engine or towable behind a vehicle;
cylinders or tanks either as individuals or as a bank located in close proximity to or remotely from a fire hazard area and in each case adapted to release their contents on to the fire hazard area.

The following examples illustrate the benefits of vermiculite suspension as a fire extinguishing material.

### Example 1

An aqueous solution of chemically exfoliated vermiculite having a controlled size distribution as illustrated in Figure 1 was prepared. Such a suspension is commercially available from Dupré Minerals Limited under the name "Aqueous Vermiculite Dispersion (DM38)".

### Example 2

A number of conventional water based gas pressurised extinguishers were filled with an aqueous vermiculite suspension in accordance with example 1. When activated the extinguishers released the vermiculite suspension in a spray through the extinguisher hose.

### Example 3

A dummy was set up and dressed in a flammable high visibility jacket. The jacket was lit using a Bunsen burner. When the jacket was on fire an extinguisher filled with vermiculite suspension in accordance with example 2 was activated and the spray directed onto the burning jacket. The spray formed a coating on the jacket which rapidly extinguished the flame.

### Example 4

An attempt was made to reignite the jacket of Example 3 by applying the burner to the jacket in an area which had been coated with the spray of vermiculite dispersion. The jacket would not reignite.

### Example 5

The experiments of Experiment 3 and 4 were repeated using just water in the extinguisher. The water doused the fire although it took a longer spraying time to achieve this. Further water was then applied to thoroughly soak the jacket. When the burner was reapplied to the soaked jacket it reignited within a few seconds.

### Example 6

A vermiculite dispersion was applied from a fire extinguisher of example 2 from a distance of approximately 2.5 metres to an upright butane gas cylinder. The dispersion formed a coating over the cylinder. In the event of a fire the application of such a coating to a gas containing vessel provides an excellent fire resistant and thermal insulation layer to reduce the chance of a violent explosion as the contents of the cylinder are exposed to increasing levels of heat and fire.

## Claims

1. Fire extinguisher apparatus comprising at least one vessel containing a fire extinguishing medium and adapted to release said fire extinguishing medium when a fire or potential fire is identified **characterised in that** said fire extinguishing medium comprises a stable aqueous suspension of fine chemically expanded vermiculite in a particle size range of from 1 nanometre to 2000 micrometres.

2. Apparatus according to any preceding claim wherein said vermiculite suspension comprises expanded vermiculite with a maximum particle size of 300 micrometres or less.

3. Apparatus according to any preceding claim wherein said vermiculite suspension comprises vermiculite at between 3% and 40% by weight.

4. Apparatus according to any preceding claim wherein said vermiculite suspension comprises vermiculite at between 10% and 30% by weight.

5. Apparatus according to any preceding claim wherein said vermiculite suspension comprises vermiculite at between 15% and 25% by weight.

6. Apparatus according to any preceding claim wherein said vermiculite suspension comprises vermiculite at 20% by weight.

7. Apparatus according to any preceding claim wherein said fire extinguishing medium remains stable in storage with the vermiculite remaining in suspension for a period of at least 6 months at between 10 to 30 degrees centigrade.

8. Apparatus according to any preceding claim comprising means to release said fire extinguisher medium as an intermittent or continuous spray and to direct said spray to a selected area.

9. A method of extinguishing or containing a fire, responsive to identification of a fire or potential fire, by applying to the fire and/or to adjacent areas and/or to areas of high risk in the event of the spread of fire a fire extinguishing medium comprising a stable aqueous suspension of fine chemically expanded vermiculite in a particle size range of from 1 nanometre to 2000 micrometres.

10. A method of extinguishing or containing a fire, responsive to identification of a fire by applying to the fire and/or to adjacent areas and/or to areas of high risk in the event of the spread of the fire a fire extinguishing and containing medium comprising a stable aqueous suspension of fine chemically expanded vermiculite in a particle size range of from 1 nanometre to 2000 micrometres from one or more apparatus in accordance with any one of claims 1 to 8.

11. A method of manufacturing fire equipment apparatus according to any one of claims 1 to 8 by fully or partially filling a vessel adapted to release a fire extinguishing medium with a fire extinguishing medium comprising a stable aqueous suspension of fine chemically expanded vermiculite in a particle size range of from 1 nanometre to 2000 micrometres.

12. Use of a stable aqueous suspension of fine chemically expanded vermiculite in a particle size range of from 1 nanometre to 2000 micrometres as a fire extinguishing medium.

## Patentansprüche

1. Feuerlöschgerät, umfassend mindestens ein Gefäß, das ein Feuerlöschmittel enthält und das angepasst ist, das Feuerlöschmittel abzugeben, wenn ein Feuer oder potenzielles Feuer identifiziert wird, **dadurch gekennzeichnet, dass** das Feuerlöschmittel eine stabile wässrige Suspension von feinem chemisch-expandiertem Vermiculit in einem Partikelgrößenbereich von 1 Nanometer zu 2000 Mikrometern umfasst.

2. Gerät nach einem vorhergehenden Anspruch, wobei die Vermiculitsuspension expandierten Vermiculit mit einer maximalen Partikelgröße von 300 Mikrometern oder weniger umfasst.

3. Gerät nach einem vorhergehenden Anspruch, wobei die Vermiculitsuspension Vermiculit mit zwischen 3 Gew.-% und 40 Gew.-% umfasst.

4. Gerät nach einem vorhergehenden Anspruch, wobei die Vermiculitsuspension Vermiculit mit zwischen 10 Gew.-% und 30 Gew.-% umfasst.

5. Gerät nach einem vorhergehenden Anspruch wobei die Vermiculitsuspension Vermiculit mit zwischen 15 Gew.-% und 25 Gew.-% umfasst.

6. Gerät nach einem vorhergehenden Anspruch, wobei die Vermiculitsuspension Vermiculit mit 20 Gew.-% umfasst.

7. Gerät nach einem vorhergehenden Anspruch, wobei das Feuerlöschmittel bei der Lagerung stabil bleibt, wobei der Vermiculit in Suspension für eine Dauer von mindestens 6 Monaten bei zwischen 10 bis 30 Grad Celsius verbleibt.

8. Gerät nach einem vorhergehenden Anspruch, umfassend Mittel zum Abgeben des Feuerlöschmittels als ein intermittierendes oder kontinuierliches Spray und zum Leiten des Sprays zu einem ausgewählten Bereich.

9. Verfahren eines Löschens oder Eindämmens eines Feuers, das auf Identifikation eines Feuers oder potenziellen Feuers reagiert, durch Anwenden eines Feuerlöschmittels, umfassend eine stabile wässrige Suspension von feinem chemisch-expandiertem Vermiculit in einem Partikelgrößenbereich von 1 Nanometer bis 2000 Mikrometern, auf das Feuer und/oder auf benachbarte Bereiche und/oder auf Bereiche mit hohem Risiko im Falle der Ausbreitung von Feuer.

10. Verfahren eines Löschens oder Eindämmens eines Feuers, das auf Identifikation eines Feuers reagiert, durch Anwenden eines Feuerlösch- und Eindämmungsmittels, umfassend eine stabile wässrige Suspension von feinem chemisch-expandiertem Vermiculit in einem Partikelgrößenbereich von 1 Nanometer bis 2000 Mikrometern aus einem oder mehreren Geräten in Übereinstimmung mit einem der Ansprüche 1 bis 8, auf das Feuer und/oder auf benachbarte Bereiche und/oder auf Bereiche mit hohem Risiko im Falle der Ausbreitung des Feuers.

11. Verfahren eines Herstellens eines Feuerlöschausrüstungsgeräts nach einem der Ansprüche 1 bis 8 durch vollständiges oder teilweises Füllen eines Gefäßes, das angepasst ist, ein Feuerlöschmittel abzugeben, wobei ein Feuerlöschmittel eine stabile wässrige Suspension von feinem chemisch-expandiertem Vermiculit in einem Partikelgrößenbereich von 1 Nanometer bis 2000 Mikrometern umfasst.

12. Verwendung einer stabilen wässrigen Suspension von feinem chemisch-expandiertem Vermiculit in einem Partikelgrößenbereich von 1 Nanometer bis 2000 Mikrometern als ein Feuerlöschmittel.

## Revendications

1. Appareil d'extincteur de feu comprenant au moins un récipient contenant un moyen d'extinction du feu et conçu pour libérer ledit moyen d'extinction du feu lorsqu'un feu ou un feu potentiel est identifié **caractérisé en ce que** ledit moyen d'extinction du feu comprend une suspension aqueuse stable de vermiculite fine expansée chimiquement dans une plage de tailles particulaires allant de 1 nanomètre à 2000 micromètres.

2. Appareil selon l'une quelconque des revendications précédentes dans lequel ladite suspension de vermiculite comprend de la vermiculite expansée avec une taille particulaire maximale de 300 micromètres ou moins.

3. Appareil selon l'une quelconque des revendications précédentes, dans lequel ladite suspension de vermiculite comprend la vermiculite située entre 3 % et 40 % en poids.

4. Appareil selon l'une quelconque des revendications précédentes, dans lequel ladite suspension de vermiculite comprend la vermiculite située entre 10 % et 30 % en poids.

5. Appareil selon l'une quelconque des revendications précédentes, dans lequel ladite suspension de vermiculite comprend la vermiculite située entre 15 % et 25 % en poids.

6. Appareil selon l'une quelconque des revendications précédentes, dans lequel ladite suspension de vermiculite comprend la vermiculite à 20 % en poids.

7. Appareil selon l'une quelconque des revendications précédentes, dans lequel ledit moyen d'extinction du feu demeure stable dans le stockage avec la vermiculite restant en suspension pendant une période d'au moins 6 mois entre 10 et 30 degrés centigrade.

8. Appareil selon l'une quelconque des revendications précédentes, comprenant un moyen pour libérer ledit moyen d'extincteur de feu comme pulvérisation intermittente ou continue et pour diriger ladite pulvérisation vers une zone sélectionnée.

9. Procédé d'extinction ou de contenance d'un feu, sensible à une identification d'un feu ou d'un feu potentiel, par l'application au feu et/ou à des zones adjacentes et/ou à des zones à risque élevé en cas de propagation d'un feu d'un moyen d'extinction du feu comprenant une suspension aqueuse stable de vermiculite fine expansée chimiquement dans une plage de tailles particulaires allant de 1 nanomètre à 2000 micromètres.

10. Procédé d'extinction ou de contenance d'un feu, sensible à une identification d'un feu par l'application au feu et/ou à des zones adjacentes et/ou à des zones à risque élevé en cas de propagation du feu d'un moyen d'extinction et de contenance du feu comprenant une suspension aqueuse stable de vermiculite fine expansée chimiquement dans une plage de tailles particulaires allant de 1 nanomètre à 2000 micromètres depuis au moins un appareil selon l'une quelconque des revendications 1 à 8.

11. Procédé de fabrication d'un appareil d'équipement de lutte contre les incendies selon l'une quelconque des revendications 1 à 8 par le remplissage complet ou partiel d'un récipient conçu pour libérer un moyen d'extinction du feu avec un moyen d'extinction du feu comprenant une suspension aqueuse stable de vermiculite fine chimiquement expansée dans une plage de tailles particulaires allant de 1 nanomètre à 2000 micromètres.

12. Utilisation d'une suspension aqueuse stable de vermiculite fine chimiquement expansée dans une plage de tailles particulaires allant de 1 nanomètre à 2000 micromètres comme moyen d'extinction du feu.
